(19) **Europäisches Patentamt**

**European Patent Office**

**Office européen des brevets**

(11) **EP 1 179 936 B1**

(12) **EUROPÄISCHE PATENTSCHRIFT**

(45) Veröffentlichungstag und Bekanntmachung des Hinweises auf die Patenterteilung:
**09.06.2004   Patentblatt 2004/24**

(51) Int Cl.⁷: **H04L 27/233**, H04L 25/03

(21) Anmeldenummer: **01116217.9**

(22) Anmeldetag: **04.07.2001**

(54) **Demodulator für CPFSK-modulierte Signale unter Verwendung einer linearen Näherung des CPFSK-Signals**

Demodulator for CPFSK signals using a linear approximation of the CPFSK signal

Démodulateur pour signaux FSK à phase continue (CPFSK) utilisant une approximation linéaire du signal CPFSK

(84) Benannte Vertragsstaaten:
**AT BE CH CY DE DK ES FI FR GB GR IE IT LI LU MC NL PT SE TR**

(30) Priorität: **08.08.2000  DE 10038681**

(43) Veröffentlichungstag der Anmeldung:
**13.02.2002   Patentblatt 2002/07**

(73) Patentinhaber: **Infineon Technologies AG**
**81669 München (DE)**

(72) Erfinder:
• **Hammes, Markus**
**47178 Duisburg (DE)**
• **Speth, Michael**
**52070 Aachen (DE)**
• **Neubauer, André**
**47807 Krefeld (DE)**
• **Madden, Michael**
**Sunnyvale, CA 94087 (US)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**US-A- 4 603 393**

• **COLAVOLPE G ET AL: "Noncoherent sequence detection of CPM" ELECTRONICS LETTERS, IEE STEVENAGE, GB, Bd. 34, Nr. 3, 5. Februar 1998 (1998-02-05), Seiten 259-261, XP006009272 ISSN: 0013-5194**
• **BAIER A: "DEROTATION TECHNIQUES IN RECEIVERS FOR MSK-TYPE CPM SIGNALS" PROCEEDINGS OF THE EUROPEAN SIGNAL PROCESSING CONFERENCE, AMSTERDAM, ELSEVIER, NL, Bd. 3 CONF. 5, 18. September 1990 (1990-09-18), Seiten 1799-1802, XP000365914**

**Beschreibung**

Die Erfindung betrifft ein Verfahren und eine Einrichtung zum Schätzen einer Folge von Eingabedatensymbolen eines CPFSK-modulierten, über einen gestörten Kanal übertragenen Datensignals.

Es sind eine Vielzahl von digitalen Modulationsarten bekannt, denen amplitudenumtastende (ASK: Amplitude Shift Keying), frequenzumtastende (FSK: Frequency Shift Keying) oder phasenumtastende (PSK: Phase Shift Keying) Verfahren sowie Mischformen derselben zugrunde liegen. Bei digitalen Kommunikationssystemen werden aus Gründen der Frequenzökonomie häufig sogenannte CPM-Modulationsarten (CPM: Continuous Phase Modulation) mit stetiger Phase verwendet. FSK mit stetiger Phase wird als CPFSK (Continuous Phase FSK) bezeichnet. Ein Beispiel hierfür ist das Gaußsche-Minimum-Shift-Keying (GMSK), welches beispielsweise im paneuropäischen Mobilfunkstandard GSM (Global System for Mobile Communications) zum Einsatz kommt.

Die originär nichtlineare CPFSK-Modulation kann näherungsweise als lineare Modulation beschrieben werden. Die dieser Eigenschaft zugrundeliegende lineare Näherung ist in dem Artikel "Exact and Approximate Construction of Digital Phase Modulations by Superposition of Amplitude Modulated Pulses (AMP)" von Pierre A. Laurent, IEEE Trans. Commun., Bd. COM-34 (1986), Seiten 150-160, angegeben.

Die Demodulation eines über einen verzerrungs- und störungsfreien Kanal übertragenen CPFSK-modulierten Datensignals ist z.B. in dem Buch "Nachrichtenübertragung" von K. D. Kammeyer, B. G. Teubner Verlag, Stuttgart 1996, Kapitel 12.1.5, Seiten 422 und 423, beschrieben. Bei einem Modulationsindex $\eta$ von 0,5 oder einem Vielfachen von 0,5 müssen lediglich die Inphasal- und Quadraturzweige des Empfangssignals alternierend (wegen des 90° Phasenversatzes zwischen diesen Zweigen) abgetastet und die erhaltenen Abtastwerte mit den entsprechenden komplexwertigen Darstellungen der der linearen Näherung zugrundeliegenden CPFSK-Ersatzsymbole verglichen werden. Als tatsächlich gesendetes Eingabedatensymbol wird dasjenige der möglichen Eingabedatensymbole bestimmt, dessen komplexwertiges Ersatzsymbol (unter der Annahme einer bekannten Anfangsphase) den beiden gemessenen Abtastwerten (Real- und Imaginärteil) am nächsten kommt.

Dieses kohärente Demodulationsverfahren für CPFSK-Signale läßt sich ohne Probleme auf rationale Modulationsindizes $\eta = m1/m2$ (wobei $m1$ und $m2$ ganzzahlig sind) verallgemeinern, da bei rationalen Modulationsindizes stets eine endliche Anzahl von Zuständen der Ersatzsymbole existiert, so daß die Demodulation (weiterhin) allein durch einen Vergleich der Abtastwerte mit dem endlichen Modulationsalphabet der Ersatzsymbole erfolgen kann.

Für nicht rationale Modulationsindizes $\eta$ gibt es indes kein endliches Modulationsalphabet der Ersatzsymbole mehr. Dies hat zur Folge, daß das herkömmliche Verfahren zur kohärenten CPFSK-Demodulation nicht mehr durchführbar ist.

Für einen verzerrenden Übertragungskanal, bei dem Intersymbolinterferenz (ISI) bei der Demodulation berücksichtigt werden muß, gilt Vergleichbares: Solange ein rationaler Modulationsindex $\eta$ verwendet wird, gelingt die Demodulation des über den gestörten Kanal übertragenen Datensignals z.B. mittels des bekannten Viterbi-Algorithmus (VA). Beim VA (der später noch näher erläutert wird), wird entsprechend der Mächtigkeit des Ersatzsymbolalphabets und des Grades der Berücksichtigung der ISI (d.h. der Länge L des Kanalgedächtnisses) ein Zustandsdiagramm (sogenanntes Trellis-Diagramm) aufgestellt und eine gesendete Datenfolge als kürzester Pfad durch das Trellis-Diagramm ermittelt. Sofern der Modulationsindex $\eta$ eine irrationale Zahl ist, wird die Realisierung bzw. Implementierung des VA jedoch unmöglich, weil eine unendlich große Anzahl von Trellis-Zuständen berücksichtigt werden müßte.

Eine generelle (d.h. nicht auf die hier betrachtete CPFSK-Modulationsform begrenzte) Problematik bei der Demodulation eines über einen gestörten, ISI-behafteten Kanal übertragenen Datensignals besteht in dem Vorhandensein von unbekannten Parametern im Empfänger. Grundsätzlich kann es sich bei den unbekannten Parametern sowohl um Kanalparameter (z.B. die Kanalimpulsantworten) als auch um Funktionsparameter des Senders handeln. Zur Schätzung unbekannter Parameter (bzgl. des Sender- und/oder Kanalzustands) bei der VA-Demodulation im Empfänger sind verschieden Verfahren bekannt. Die klassische Vorgehensweise wird durch die DFE-(Decision Feedback Equalization-) Techniken repräsentiert. Dabei werden für alle möglichen Übergänge zwischen zwei aufeinanderfolgenden Zeitschritten im Trellis, für die Übergangsmetriken zu berechnen sind, die gleichen, geschätzten (unvollständig bekannten) Parameter herangezogen, und die Schätzung dieser universellen Parameter wird anhand einer rückgekoppelten, um einige Zeitschritte verzögert vorliegenden, "vorläufigen" Folge von demodulierten Datensymbolen getroffen, die - je nach gewählter Verzögerung - bereits mehr (große Verzögerung) oder weniger (geringe Verzögerung) gut der gesuchten Folge aus Eingabedatensymbolen entspricht. Auf die bekannten DFE-Techniken wird hier nicht weiter eingegangen, es sei jedoch erwähnt, daß ein Hauptproblem dieser Technik darin besteht, daß die Schätzung von unbekannten Parametern unter Verwendung rückgekoppelter "vorläufiger" Ergebnisdaten bei Wahl einer kurzen Verzögerung kritisch ist, weil die Fehlerrate der vorläufigen Ergebnisdaten dann noch zu hoch sein kann, und bei Wahl einer längeren Verzögerungszeit unbefriedigend werden kann, weil dann die geschätzten Parameter (z.B. Kanalimpulsantworten) zum Zeitpunkt ihrer Schätzung bereits überholt sind.

Eine andere Möglichkeit zur Durchführung des VA bei Vorhandensein von unbekannten Parametern ist in US 5,432,821 beschrieben. Dieses als Per-Survivor Processing (PSP) bezeichnete Verfahren beruht auf der Idee, für jeden im Trellis-Diagramm verfolgten und schrittweise fortgeführten Pfad eine gesonderte oder individuelle Schätzung der unbekannten Parameter basierend auf Größen, die nur diesem betrachteten Pfad zugeordnet sind - und daher zum Zeitpunkt der Schätzung bereits berechnet sind - vorzunehmen und bei der Berechnung der Übergangsmetriken zu berücksichtigen. Diese Vorgehensweise, die in US 5,432,821 für das Beispiel der Schätzung von Kanalparametern erläutert wird, hat den Vorteil, daß keine zeitverzögerte Sequenz von vorläufig entschiedenen Ergebnisdaten berechnet und rückgekoppelt werden muß.

Der Erfindung liegt die Aufgabe zugrunde, ein Verfahren sowie eine Einrichtung zur Demodulation einer Folge von Eingabedatensymbolen eines CPFSK-modulierten und über einen gestörten Kanal übertragenen Datensignals zu schaffen, das die senderseitige Verwendung eines nicht rationalen Modulationsindex gestattet und insbesondere auch für den Fall des Vorhandenseins unbekannter Parameter eine leistungsfähige Demodulation ermöglicht.

Zur Lösung der Aufgabenstellung sind die Merkmale der unabhängigen Ansprüche vorgesehen.

Ein wesentlicher Aspekt der Erfindung besteht darin, daß für die Berechnung des Übergangsmetrikwertes für einen Übergang zwischen den Zeitschritten n und n+1 ein erster Schätzwert für das im vorhergehenden Zeitschritt n-1 bei der linearen Näherung der CPFSK auftretende Ersatzsymbol herangezogen wird. Es wird also im Zeitschritt n der Zustand des Senders im Zeitschritt n-1 geschätzt und die Berechnung eines rekonstruierten Signalwertes auf der Basis dieses geschätzten Senderzustands durchgeführt. Diese erfindungsgemäße Vorgehensweise wird im folgenden auch als TST (Transmitter State Trakking) bezeichnet. Da der (ein Zeitschritt zurückliegende) Senderzustand (d.h. das entsprechende Ersatzsymbol) geschätzt wird, ist das Vorhandensein eines endlichen Modulationsalphabets nicht erforderlich. Das erfindungsgemäße Verfahren ist somit auch für die Verwendung von irrationalen Modulationsindizes geeignet.

Vorzugsweise erfolgt die Ermittlung des ersten Schätzwertes unter Verwendung des im vorhergehenden Zeitschritt ermittelten ersten Schätzwertes, d.h. man kann von einer inkrementalen Bestimmung des ersten Schätzwertes sprechen.

Vorzugsweise wird ferner ein zweiter Schätzwert bestimmt, der eine Phasenkorrektur des für die Berechnung des Übergangsmetrikwertes benötigten rekonstruierten Signalwertes darstellt. Dies eröffnet die Möglichkeit, das TST-Demodulationsverfahren auch ohne eine exakte Kenntnis von Einflußgrößen durchzuführen, die einen Phasenfehler des rekonstruierten Signalwertes bewirken.

Ein erstes Beispiel für eine derartige Einflußgröße ist der Modulationsindex $\eta$. Ist im Empfänger der Modulationsindex $\eta$ nicht oder nicht exakt bekannt, hat dies zur Folge, daß eine Phasenverschiebung zwischen dem tatsächlichen Senderzustand und dem nachgeführten, gemäß dem TST-Verfahren geschätzten Senderzustand auftritt. Da der nachgeführte Senderzustand in die Berechnung des rekonstruierten Signalwertes und damit in die Berechnung des Übergangsmetrikwertes eingeht, würde dies die Demodulationsleistung beeinträchtigen. Durch die Ermittlung des zweiten Schätzwertes für eine Phasenkorrektur des rekonstruierten Signalwertes wird auch im Fall eines empfängerseitig nicht oder nicht exakt bekannten Modulationsindex $\eta$ eine leistungsstarke Signaldemodulation ermöglicht.

Ein weiteres Beispiel für eine derartige Einflußgröße ist - für den Fall, daß die Frequenzmodulation relativ zu einer Trägerfrequenz vorgenommen wird und auf Empfängerseite die Verschiebung um die Trägerfrequenz durch Heruntermischen rückgängig gemacht werden muß - ein Frequenz-Offset zwischen der zum Hochmischen verwendeten Trägerfrequenz des Senders und der zum Heruntermischen verwendeten Trägerfrequenz des Empfängers. Dieser Frequenz-Offset, der auch durch eine Drift einer oder beider Mischfrequenzen bewirkt werden kann, wirkt sich ebenfalls als Phasenfehler des rekonstruierten Signals aus. Somit können durch das erfindungsgemäße Konzept neben einer Unkenntnis des Modulationsindex im Empfänger auch Frequenz-Offsets bzw. Frequenz-Drifts zwischen dem Sender und dem Empfänger berücksichtigt werden.

Vorzugsweise wird dieser zweite Schätzwert für den n-ten Zeitschritt durch die Berechnung der Phasendifferenz zwischen dem rekonstruierten Signalwert und einem Wert eines empfangenen Datensymbols ermittelt. Dadurch kann in jedem Zeitschritt eine Aktualisierung des zweiten Schätzwertes erreicht und bei der Berechnung des Übergangsmetrikwertes für den entsprechenden Pfad berücksichtigt werden.

Die Erfindung wird nachfolgend anhand eines Ausführungsbeispiels unter Bezugnahme auf die Zeichnung beschrieben; in dieser zeigt:

Fig. 1        ein Blockschaltbild zur Erläuterung der prinzipiellen Struktur eines digitalen Übertragungssystems;

Fig. 2        ein Blockschaltbild zur Erläuterung der Funktionsweise eines binären CPFSK-Modulators nach dem Stand der Technik;

Fig. 3        ein Blockschaltbild zur Erläuterung der Grundstruktur eines kohärenten CPFSK-Demodulators;

Fig. 4a       eine Zeiger- oder Signalraum-Darstellung der möglichen Ersatzsymbole bei CPFSK mit einem Modulationsindex $\eta$ = 0,5;

Fig. 4b    eine Zeiger- oder Signalraum-Darstellung der möglichen Ersatzsymbole bei CPFSK mit einem irrationalen Modulationsindex η;

Fig. 5    ein Ersatzschaltbild eines verzerrenden Übertragungskanals;

Fig. 6    einen Ausschnitt aus einem Trellis-Diagramm zur Erläuterung der Viterbi-Entzerrung; und

Fig. 7    ein vereinfachtes Blockschaltbild eines Viterbi-Decodierers, ausgelegt für das PSP-Verfahren.

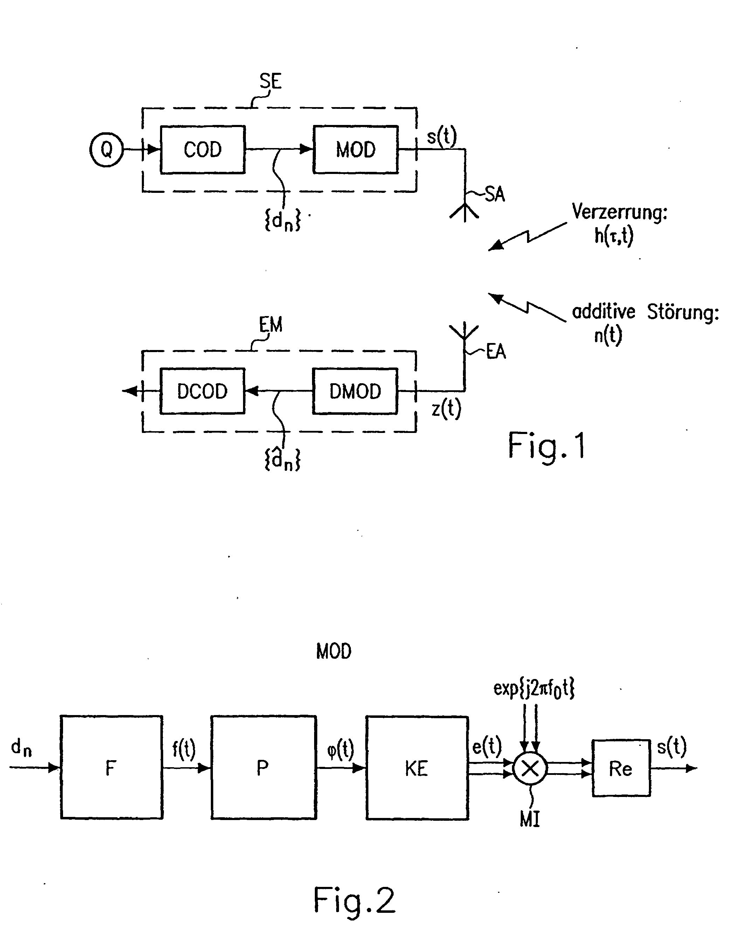

Fig. 1 zeigt den bekannten prinzipiellen Aufbau eines digitalen Übertragungssystems, wie es beispielsweise im Mobilfunk zur Signalübertragung eingesetzt wird.

Eine Sendeeinrichtung SE nimmt ein (beispielsweise durch ein Mikrophon erzeugtes) analoges Quellensignal Q entgegen und führt dieses einem Codierer COD zu. Der Codierer COD umfaßt in nicht dargestellter Weise einen Analog-Digital-Umsetzer zur Digitalisierung des Quellensignals Q und kann ferner einen Quellencodierer, einen Kanalcodierer, einen Verschachteler und einen Blockbildner enthalten, die das digitalisierte Quellensignal Q in geeigneter Weise komprimieren, fehlerschutzcodieren, verschachteln und in Datenblöcke unterteilen.

Der Codierer COD gibt ein digitales Datensignal aus, das aus einer Symbolfolge $\{d_n\}$ der Datensymbole $d_0$, $d_1$, ... besteht, denen beispielsweise der Wertevorrat $\{-1, 1\}$ zugrunde liegt. Die Symbolfolge $\{d_n\}$ wird einer Modulatoreinrichtung MOD zugeführt, die in Abhängigkeit von der Symbolfolge $\{d_n\}$ einen hochfrequenten Träger moduliert. Das dabei erzeugte modulierte, zeitabhängige, reelle Sendesignal s(t) wird in einen Übertragungskanal eingespeist, d.h. beispielsweise über eine Sendeantenne SA als Funksignal abgestrahlt. Die Datensymbole $d_0$, $d_1$, ... werden im folgenden als Eingabedatensymbole (für die Modulatoreinrichtung) bezeichnet.

Bei der Übertragung des Sendesignals s(t) über den Übertragungskanal können Signalverzerrungen und Signalstörungen auftreten, die beide von der Art des Übertragungskanals abhängig sind.

Der verzerrende Einfluß des Übertragungskanals wird durch eine Kanalimpulsantwort $h(\tau,t)$ beschrieben. Der dem verzerrten Signal überlagerte additive Störungsanteil wird durch eine Funktion n(t) beschrieben. Ein an einem Empfänger EM empfangenes zeitkontinuierliches Empfangssignal z(t) ergibt sich demnach zu

$$z(t) = \int_0^\infty h(\tau, t) \cdot s(t - \tau)d\tau + n(t) \qquad (1)$$

Der Empfänger EM empfängt das am Ausgang des Übertragungskanals vorliegende (verzerrte und gestörte) reelle Empfangssignal z(t) z.B. über eine Empfangsantenne EA. Das Empfangssignal z(t) wird einem Demodulator DMOD zugeführt. Dieser demoduliert das Empfangssignal z(t). Am Ausgang des Demodulators DMOD steht eine Symbolfolge $\{\hat{d}_n\}$ bereit, deren Elemente $\hat{d}_n$ Schätzwerte der zugehörigen Eingabedatensymbole $d_n$ sind. Die Decodierung der demodulierten Symbolfolge $\{\hat{d}_n\}$ erfolgt in einem ausgangsseitig des Demodulators DMOD angeordneten Decodierers DCOD.

Zur Erläuterung der CPFSK-Modulation zeigt Fig. 2 in Form eines Blockschaltbildes die Struktur einer bekannten CPFSK-Modulatoreinrichtung MOD. Dabei sind in Fig. 2 reellwertige Größen durch einen einfachen Pfeil und komplexwertige Größen durch einen Doppelpfeil kenntlich gemacht.

Der CPFSK-Modulator MOD weist im Signalweg ein Filter F, einen Phasenakkumulator P, eine Einrichtung KE zur Erzeugung einer komplexen Einhüllenden e(t), eine Mischstufe MI und eine Einrichtung Re zur Bildung des Realteils eines einlaufenden Signals auf. Am Ausgang der letztgenannten Einrichtung Re steht das (reelle) modulierte Signal s(t) zur Verfügung.

Das Filter F weise die reelle Impulsantwort g(t) auf. Die Impulsantwort g(t) wird im folgenden als Basisbandimpuls bezeichnet. Die Impulsform und die (zeitliche) Länge des Basisbandimpulses g(t) definieren die CPFSK-Modulationsart.

Bekanntlich können verschiedene Impulsformen, beispielsweise Rechteckimpulse, $\cos^2$-Impulse oder auch Gauß-Impulse, als Basisbandimpuls eingesetzt werden.

Die Impulslänge T·K des Basisbandimpulses g(t) (d.h. die Zeitdauer, über die der Basisbandimpuls g(t) einen von Null verschiedenen Wert aufweist) kann sich über K = 1, 2, 3, .. Symbolzeitdauern T erstrecken. Bei K = 1 wird von Full-Response-Modulationsarten gesprochen. Erstreckt sich der Basisbandimpuls g(t) über mehrere Symbolzeitdauern (d.h. K = 2, 3, ..), werden sogenannte Partial-Response-Modulationsarten generiert.

Das am Ausgang des Filters F auftretende reelle Pulsamplituden-modulierte Frequenzsignal f(t) ist eine lineare Überlagerung zeitverschobener und mit den Symbolen $d_n$ der Eingabedatensymbolfolge $\{d_n\}$ gewichteter Versionen von g(t):

$$f(t) = \sum_n d_n g(t - nT) \tag{2}$$

Im Phasenakkumulator P wird das Pulsamplituden-modulierte Frequenzsignal f(t) zur Bildung des Phasensignals $\varphi(t)$ integriert. In der Einrichtung KE zur Erzeugung der komplexen Einhüllenden e(t) wird diese gemäß der Gleichung

$$e(t) = \exp\{j(\varphi(t) + \varphi 0)\} \tag{3}$$

aus dem Phasensignal $\varphi(t)$ berechnet. Dabei bezeichnet j die imaginäre Einheit und $\varphi_0$ eine Integrationskonstante. Folglich ergibt sich die komplexe Einhüllende e(t) nach:

$$e(t) = \exp\left\{j\left(2\pi\Delta F \int_{-\infty}^{t} f(\tau)d\tau\right)\right\} \tag{4}$$

Dabei bezeichnet $\Delta F$ den bei der Modulation eingesetzten Frequenzhub. Der Modulationsindex $\eta$ ist in üblicher Weise durch $\eta = 2\Delta FT$ definiert.

Die komplexe Einhüllende e(t) wird dann in der Mischstufe MI mit dem hochfrequenten Träger der Frequenz $f_0$ multipliziert. Der Realteil (Re) des heraufgemischten Signals ist das modulierte Sendesignal s(t).

Die primär nichtlineare CPFSK-Modulation läßt sich gemäß dem bereits erwähnten Artikel von P. A. Laurent näherungsweise als eine lineare Modulation unter Verwendung von Ersatzsymbolen $a_n$ anstelle der Eingabedatensymbole $d_n$ darstellen:

$$e(t) \approx \sum_n a_n \cdot C_0(t - nT) \tag{5}$$

Zwischen dem sogenannten Elementarimpuls $C_0(t)$ und dem Basisbandimpuls g(t) besteht eine bekannte, funktionale Beziehung, die es ermöglicht, bei vorgegebener CPFSK-Modulationsart (d.h. bei vorgegebenem Basisbandimpuls g(t)) den zugehörigen Elementarimpuls $C_0(t)$ zu bestimmen. In diesem Zusammenhang wird auf den bereits erwähnten Artikel von P. A. Laurent verwiesen.

Zwischen den Ersatzsymbolen $a_n$ und den Eingabedatensymbolen $d_n$ besteht die folgende Beziehung:

$$a_n = \exp\left\{j\pi\eta \sum_{i=-\infty}^{n} d_i\right\} \tag{6}$$

Jedes Ersatzsymbol ergibt sich demzufolge aus den akkumulierten Eingabedatensymbolen.

Gleichung (6) zeigt, daß nur für den Fall eines rationalen Modulationsindex $\eta$ eine endliche Anzahl von Ersatzsymbolen existiert. Aus Gleichung (6) folgt ferner die Beziehung:

$$a_n = a_{n-1} \exp\{j\pi\eta d_n\} \tag{7}$$

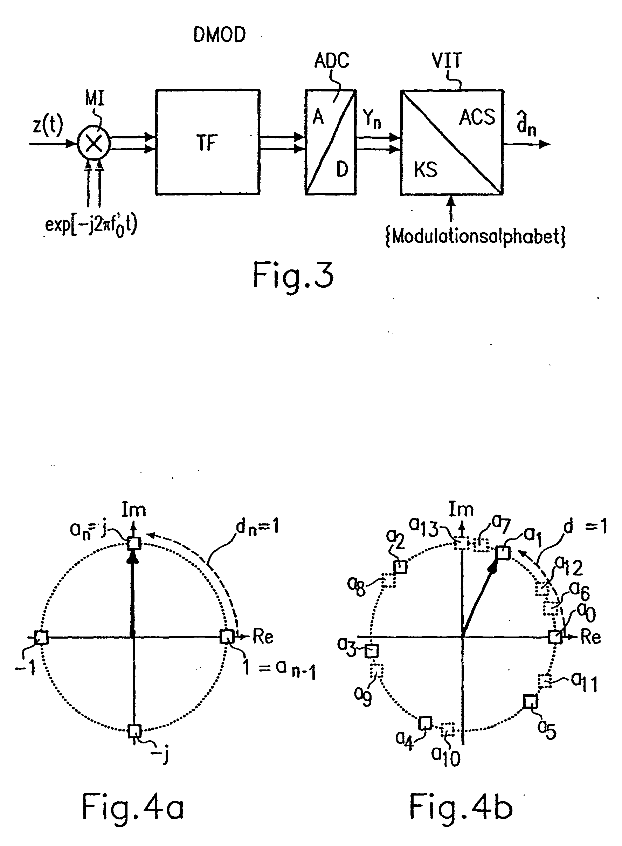

Fig. 4a zeigt eine Zeiger- oder Signalraum-Darstellung der möglichen Ersatzsymbole $a_n$ bei CPFSK mit einem Modulationsin-Modulationsindex $\eta = 0{,}5$. Auf der x-Achse ist der Realteil und auf der y-Achse der Imaginärteil aufgetragen. Es wird deutlich, daß bei $\eta = 0{,}5$ vier Zustände existieren, d.h. die Ersatzsymbole $a_n$ (bei einer Anfangsphase von 0) für $d_n = 1$ oder -1 lediglich die vier Werte 1, j, -1, -j annehmen können. Diese vier Werte von $a_n$ werden als Modulationsalphabet bezeichnet.

Es sei beispielsweise $a_{n-1} = 1$. Durch ein Eingabedatensymbol $d_n = 1$ wird der durch den gestrichelt gezeichneten Pfeil dargestellte Zustandsübergang zu $a_n = j$ erzeugt. Der Wert des Ersatzsymbols zum Zeitschritt n beschreibt den Zustand des Senders. Er ist durch die Folge der Eingabedatensymbole bestimmt.

Im folgenden wird anhand Fig. 3 zunächst die als solche bekannte Grundstruktur eines Demodulators DMOD für die Demodulation eines CPFSK-Signals für den Fall eines ISI-behafteten Übertragungskanals mit additivem Rauschen erläutert. Der Demodulator DMOD soll aus dem Empfangssignal z(t) die Eingabedatensymbolfolge $\{d_n\}$ bestimmen. Komplexwertige Größen sind wiederum durch einen Doppelpfeil dargestellt.

Der Demodulator DMOD kann eine Mischstufe MI umfassen, die mit der Frequenz $f'_0$ betrieben wird (idealerweise gilt $f_0 = f'_0$), und die zum Heruntermischen des Empfangssignals z(t) in das Basisband dient. Möglich ist aber auch eine Bearbeitung des Empfangssignals z(t) im Bandpaßbereich mit einer geeignet gewählten Zwischenfrequenz.

Zur Bandbreitenbegrenzung wird ein Tiefpaßfilter TF verwendet. Nach der Filterung erfolgt eine Abtastung des heruntergemischten, gefilterten Empfangssignals z(t) mittels eines Analog-Digital-Umsetzers ADC. Die Abtastung erfolgt mindestens im Symboltakt 1/T.

Am Ausgang des ADC steht eine Folge $\{y_n\}$ bestehend aus komplexwertigen Abtastwerten $y_n$ bereit.

Die Folge $\{y_n\}$ von komplexwertigen Abtastwerten wird einem Viterbi-Entzerrer VIT zugeführt. Der Viterbi-Entzerrer VIT umfaßt einen Kanalschätzer KS sowie eine ACS-(Add-Compare-Select-)Berechnungseinheit ACS. Beiden werden die komplexwertigen Abtastsymbole $y_n$ eingegeben.

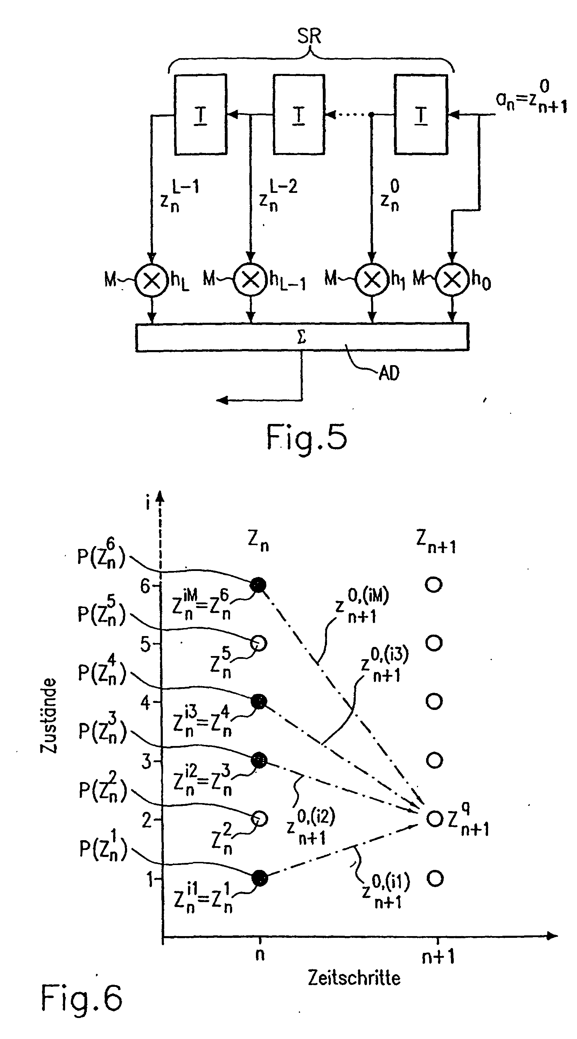

Die Abtastwerte $y_n$ lassen sich in einem einfachen Modell, siehe Fig. 5, in dem der Übertragungskanal als endlicher, getakteter Automat beschrieben wird, gemäß

$$y_n = \sum_{l=0}^{L} a_{n-1} h_l + n_n \tag{8}$$

als zeitdiskrete Faltung des aktuellen und der letzten L gesendeten Ersatzsymbole mit L+1 Kanalimpulsantworten $h_0$, $h_1$, .., $h_L$, zuzüglich einer die additive Störung n(t) repräsentierenden Störsymbolfolge $\{n_n\}$, bestehend aus Störsymbolen $n_n$, ausdrücken. Der Automat umfaßt ein Schieberegister SR bestehend aus L Speicherzellen T. Vor und hinter jeder Speicherzelle T befinden sich jeweils Abgriffe (insgesamt L+1 Stück), die zu Multiplizierern M führen, welche die Werte der Datensymbole mit jeweils einer Kanalimpulsantwort $h_0$, $h_1$, .., $h_L$ multiplizieren. Die Ausgabestufe des Automaten wird durch einen Addierer AD realisiert, der die Ausgänge der L+1 Multiplizierer aufaddiert.

Zum n-ten Zeitschritt wird dem Schieberegister SR eingangsseitig das Ersatzsymbol $a_n$ zugeführt. Die Speicherzellen des Schieberegisters SR speichern in diesem Moment die zuvor eingegebenen Ersatzsymbole ($a_{n-L}$, .., $a_{n-2}$, $a_{n-1}$). Mit jedem Zeitschritt ändert sich im allgemeinen der Speicherinhalt einer jeden Speicherzelle, da das abgespeicherte Ersatzssymbol in die nächste Speicherzelle T geschoben wird.

Zur empfängerseitigen Rekonstruktion einer Ersatzsymbolfolge $\{a_n\}$ bestehend aus p+1 Elementen (p ist eine ganze positive Zahl) besagt die MLSE (Maximum-Likelihood Sequence Estimation), daß als mutmaßlich gesendete Folge diejenige $\{\hat{a}_n\}$ der möglichen p+1-elementigen Ersatzsymbolfolgen $\{a_n\}$ im Empfänger zu bestimmen ist, deren Symbole, gewichtet mit den im Empfänger geschätzten Kanalimpulsantworten $h_0$, $h_1$, .., $h_L$, den geringsten Euklidschen Abstand zu der Folge der gemessenen Abtastwerte $y_n$ hat. Die Bedingung für die gesuchte p+1-elementige Ersatzsymbolfolge $\{\hat{a}_n\}$ lautet demnach:

$$\sum_{n=0}^{L+p} \left( y_n - \sum_{l=0}^{L} a_{n-1} \hat{h}_l \right)^2 = \text{Minimum für } \{a_n\} = \{\hat{a}_n\} \tag{9}$$

Der Grundgedanke des Viterbi-Algorithmus (VA) besteht darin, die MLSE-Bedingungsgleichung (9) rekursiv zu lösen.

Bei der herkömmlichen VA-Demodulation eines CPFSK-modulierten Signals wird zur Definition eines kombinierten Sender- und Kanalzustands in einem Trellis-Zustandsdiagramm der Speicherinhalt des Schieberegisters SR und eine akkumulierte Anfangsphase

$$\phi_{n-L-1} = \pi\eta \sum_{l=-\infty}^{n-L-1} d_l$$

herangezogen. Für die zuletzt auftretenden Ersatzsymbole $a_{n-L}, .., a_{n-2}, a_{n-1}$ wird dieser Zustand durch das L+1-Tupel $A_n = (\phi_{n-L-1}; a_{n-L}, .., a_{n-2}, a_{n-1})$ beschrieben. Dieser Zustand ist im Empfänger unbekannt.

Allgemein kann der kombinierte Sender- und Kanalzustand im Zeitschritt n durch das L+1-Tupel $Z_n = (\tilde{\phi}_n ; z_n^{L-1}, .., z_n^1, z_n^0)$ beschrieben werden, wobei mit der Variablen $z_n^0$ der Speicherinhalt der eingangsseitig ersten Speicherzelle T im Zeitschritt n, mit den Variablen $z_n^1, .., z_n^{L-1}$ die Speicherinhalte der nachfolgenden Speicherzellen T im Zeitschritt n und mit der Variablen $\tilde{\phi}_n$ die Anfangsphase $\phi_{n-L-1}$ bezeichnet werden. Jede der Variablen $z_n^{L-1}, .., z_n^1, z_n^0$ kann die Werte des Modulationsalphabets (d.h. bei der herkömmlichen VA die Werte der Ersatzsymbole) annehmen.

Die gesendete Folge $\{a_n\}$ bestimmt einen Pfad durch das Trellis-Diagramm. In einem Trellis-Diagramm sind über den Zeitschritten n jeweils sämtliche mögliche Zustände $Z_n$ oder eine geeignete Auswahl von möglichen Zuständen (reduziertes Trellis-Diagramm) aufgetragen. Der VA ermittelt zur Schätzung der gesendeten Folge $\{a_n\}$ die Folge $\{A_n\}$ der Zustände durch das Trellis-Diagramm. Der durch die Folge $\{A_n\}$ bestimmte Pfad durch das Trellis-Diagramm wird als bester oder "kürzester" Pfad durch das Trellis-Diagramm bezeichnet.

Fig. 6 zeigt am Beispiel eines M-stufigen Ersatzsymbol-Datensignals und eines rationalen Modulationsindex (für die Darstellung wurde entsprechend Fig. 4a M = 4 gewählt) einen Ausschnitt des Trellis-Diagramms für die beiden Zeitschritte n und n+1. Jeder Kreis repräsentiert einen der in dem betrachteten Trellis-Diagramm berücksichtigten Zustände. Die Zustände zum Zeitschritt n werden mit $Z_n^1, Z_n^2, ..$, allgemein $Z_n^i$, bezeichnet. Eine entsprechende Notation wird für die möglichen Zustände zum Zeitschritt n+1 verwendet.

Jeder Zustand zum Zeitschnitt n+1 kann durch M Übergänge ausgehend von M unterschiedlichen Vorgänger-Zuständen zum Zeitschritt n erreicht werden. Betrachtet werden nun diejenigen M möglichen Vorgänger-Zustände zum Zeitschritt n, die zu einem bestimmten, mit dem Index q gekennzeichneten Zustand $Z_{n+1}^q$ zum Zeitschritt n+1 führen. Für jeden dieser M möglichen Vorgänger-Zustände $Z_n^{i1}, Z_n^{i2}, .., Z_n^{iM}$ zum Zeitschritt n, die in Fig. 6 fett dargestellt sind (d.h. in Fig. 6 ist i1=1, i2=3, i3=4 und iM=i4=6), wurde bei der vorherigen Rekursion bereits der kürzeste, auf diesen Zustand führende Pfad $P(Z_n^{i1}), P(Z_n^{i2}), P(Z_n^{i3})$ bzw. $P(Z_n^{iM})$ ermittelt. Diese kürzesten Pfade werden, wie bereits erwähnt, jeweils durch die Folge der auf dem Pfad liegenden Vorgänger-Zustände repräsentiert, d.h. $P(Z_n^i)=\{Z_0^a, Z_2^b, Z_3^c, .., Z_n^i\}$, wobei a, b, c die Indizes der entsprechenden Zustände sind.

Die Frage ist, welcher dieser M Pfade, die zu den möglichen Vorgänger-Zuständen $Z_n^{i1}, Z_n^{i2}, .., Z_n^{iM}$ hinführen, derjenige ist, welcher, wenn er zu dem betrachteten Zustand $Z_{n+1}^q$ im Zeitschritt n+1 fortgesetzt wird, den kürzesten Pfad $P(Z_{n+1}^q)$ zu diesem Zustand $Z_{n+1}^q$ aufbaut.

Zur Beantwortung dieser Frage wird beim VA für jeden der betrachteten Übergänge (zwischen einem der möglichen Vorgänger-Zustände $Z_n^{i1}, Z_n^{i2}, .., Z_n^{iM}$ und dem betrachteten Ziel-Zustand $Z_{n+1}^q$) ein Übergangsmetrikwert (oder Metrikinkrement) $I(Z_n^{i1}, y_n), I(Z_n^{i2}, y_n), .., I(Z_n^{iM}, y_n)$ berechnet, und zwar gemäß:

$$I(Z_n^i, y_n) = \left( y_n - \sum_{l=1}^{L} z_n^{l-1,(i)}\hat{h}_l - a_n^{(i\to q)}\hat{h}_0 \right)^2 \qquad (10)$$

i = i1, i2, .., 1M,

Dabei werden nach der bereits eingeführten Notation die M möglichen, bekannten Vorgänger-Zustände jeweils durch ein L+1-Tupel $Z_n^i = (\tilde{\phi}_n ; z_n^{L-1,(i)}, .., z_n^{1,(i)}, z_n^{0,(i)})$, i = i1, i2, .., iM, beschrieben und $a^{(i\to q)}$ bezeichnet dasjenige Ersatzsymbol, das den Vorgänger-Zustand mit Index i in den Ziel-Zustand mit Index q überführt, d.h. es gilt $z_{n+1}^{0,(q)} = a_n^{(i\to q)}$.

Aufgrund der rekursiven Berechnungsweise ist zum Zeitschritt n für jeden der M möglichen Vorgänger-Zustände $Z_n^{i1}, Z_n^{i2}, .., Z_n^{iM}$ bereits eine minimale Metrik $Me(Z_n^{i1}), Me(Z_n^{i2}), .., Me(Z_n^{iM})$ berechnet worden. Auf der Basis dieser bekannten M minimalen Metriken $Me(Z_n^{i1}), Me(Z_n^{i2}), .., Me(Z_n^{iM})$ für die möglichen Vorgänger-Zustände und der berechneten M Übergangsmetrikwerte $I(Z_n^i, y_n)$ für die jeweiligen Übergänge wird der Pfad-Entscheidungsprozeß für den Zeitschritt n durchgeführt. Er umfaßt drei Schritte:

- Durch einen **Additionsschritt** ("ADD") werden die mit $me^i(Z_{n+1}^q)$ bezeichneten M Kandidaten für die minimale Metrik des betrachteten Ziel-Zustands $Z_{n+1}^q$ als Summe jeweils der minimalen Metrik einer der Vorgänger-Zustände und des zugehörigen Metrikinkrements nach

$$me^i(Z_{n+1}^q) = Me(Z_n^i) + I(Z_n^i, y_n), \qquad i = i1, i2, .., iM \tag{11}$$

berechnet.

- Durch einen **Vergleichsschritt** ("COMPARE") wird diejenige der M berechneten Metriken $me^i(Z_{n+1}^q)$ bestimmt, die den kleinsten Wert aufweist. Diese wird die minimale Metrik $Me(Z_{n+1}^q)$ des betrachteten Ziel-Zustands $Z_{n+1}^q$.

- Durch einen **Auswahlschritt** ("SELECT") wird derjenige Vorgänger-Zustand der M möglichen Vorgänger-Zustände $Z_n^{i1}$, $Z_n^{i2}$, .., $Z_n^{iM}$ ausgewählt, der Ausgangspunkt des Übergangs zum Zustand $Z_{n+1}^q$ mit der minimaler Metrik $Me(Z_{n+1}^q)$ ist, d.h. es wird der Index i, bezeichnet als i(q), ermittelt, für den $me^i(Z_{n+1}^q) = Me(Z_{n+1}^q)$ gilt. Damit ist der richtige Vorgänger-Zustand bestimmt. Der entsprechende Pfad wird in den Zustand $Z_{n+1}^q$ verlängert, die Pfade, die zu den übrigen Voränger-Zuständen führen, werden nicht weiter verfolgt.

Diese drei Schritte sind als ACS-(Add-Compare-Select-)Operation bekannt. Anschaulich gesprochen wird im Rahmen einer ACS-Operation für jeden Zustand zum Zeitschritt n+1 festgestellt, aus welchem Pfad die bisher empfangenen Daten mit höchster Wahrscheinlichkeit kommen. Nur dieser Pfad ("survivor") wird fortgesetzt, d.h. bei der nächsten ACS-Operation noch berücksichtigt. Das in jedem Schritt praktizierte Verwerfen von möglichen Pfaden begründet die Aufwandsgünstigkeit des VA zur Lösung der MLSE.

Diese bekannte Anwendung des VA bei der Demodulierung eines CPFSK-Signals ist nur für rationale Modulationsindizes möglich. Bei einem nicht rationalen Modulationsindex würden sich unendlich viele Zustände pro Zeitschritt ergeben, weshalb der Trellis nicht realisierbar bzw. implementierbar wäre.

Der erfindungsgemäßen TST-Demodulierung eines CPFSK-Signals wird kein vorgegebenes Ersatzsymbol-Modulationsalphabet zugrundegelegt, sondern es wird das ein Zeitschritt zurückliegende (n-1-te), bei der Modulation auftretende Ersatzsymbol (Senderzustand) im darauffolgenden (n-ten) Zeitschritt empfängerseitig geschätzt. Der Senderzustand wird im Empfänger "nachgeführt".

Diese Vorgehensweise ermöglicht, die MLSE eines CPFSK-modulierten Signals auf der Basis kombinierter Sender- und Kanalzustände, die nicht mehr die akkumulierte Phase enthalten, durchzuführen. Die Zustände werden so zugewiesen, daß nur die letzten L Eingabedatensymbole entsprechend der vorhandenen ISI berücksichtigt werden. Mithin wird der i-te Zustand des der erfindungsgemäßen MLSE zugrundeliegenden Trellis-Diagramms zum Zeitschritt n allgemein durch das L-Tupel $Z_n^i = (z_n^{L-1,(i)}, .., z_n^{1,(i)}, z_n^{0,(i)})$ beschrieben, wobei die Variablen $z_n^{L-1,(i)}, .., z_n^{1,(i)}, z_n^{0,(i)}$ nun die möglichen Werte der Eingabedatensymbole $d_n$, d.h. $\{1, -1\}$, annehmen können.

Der tatsächliche, im Empfänger unbekannte Kanalzustand zum Zeitschritt n ist durch das L-Tupel $D_n = (d_{n-L}, .., d_{n-2}, d_{n-1})$ gegeben.

Die erfindungsgemäße Durchführung einer ACS-Operation wird im folgenden für das Beispiel L = 2 erläutert. Mit $\hat{r}_n^{(i)}$ wird das ungestörte, rekonstruierte Signal zum Zeitschritt n im Zustand mit Index i, d.h. $Z_n^i$, bezeichnet. Gemäß Gleichung (9) gilt:

$$\sum_{l=0}^{L} a_{n-1} \hat{h}_l \quad \overset{L=2}{=} \quad a_n \hat{h}_0 + a_{n-1} \hat{h}_1 + a_{n-2} \hat{h}_2$$

$$= \quad a_{n-1} e^{j\pi d_n} \hat{h}_0 + a_{n-1} \hat{h}_1 + a_{n-1} e^{j\pi(-d_{n-1})} \hat{h}_2$$

d.h.

$$\hat{r}_n^{(i)} = \sum_{l=0}^{L} a_{n-1}^{(i)} \hat{h}_l$$

$$= a_{n-1}^{(i)} e^{j\pi\eta d_n^{(i\rightarrow q)}} \hat{h}_0 + a_{n-1}^{(i)} \hat{h}_1 + a_{n-1}^{(i)} e^{j\pi\eta(-z_n^{0,(i)})} \hat{h}_2$$

$$= a_{n-1}^{(i)} \left( e^{j\pi\eta d_n^{(i\rightarrow q)}} \hat{h}_0 + \hat{h}_1 + e^{j\pi\eta(-z_n^{0,(i)})} \hat{h}_2 \right) \qquad (12)$$

wobei mit $a_{n-1}^{(i)}$ das dem i-ten Senderzustand zugeordnete Ersatzsymbol und mit $d_n^{(i\rightarrow q)}$ dasjenige Eingabedatensymbol bezeichnet wird, das zum Zeitschritt n von dem Vorgänger-Zustand mit Index i in den Ziel-Zustand mit Index q führt. Da die Zustandsbeschreibung bei der erfindungsgemäßen MLSE nicht mehr anhand der Ersatzsymbole erfolgt, ist $a_{n-1}^{(i)}$ im Empfänger a-priori unbekannt (bei der zuvor beschriebenen herkömmlichen VA wäre $a_{n-1}^{(i)} = z_n^{0,(i)}$ durch den betrachteten Ausgangs-Zustand vorgegeben).

Es wird daher im Empfänger ein Schätzwert für $\hat{a}^{(i)}$ ermittelt. Der Schätzwert wird mit $\hat{a}^{(i)}$ bezeichnet. Das Prinzip, unter Ermittlung eines Schätzwertes $\hat{a}_{n-1}^{(i)}$ für $a_{n-1}^{(i)}$ eine MLSE auf der Basis einer Zustandsbeschreibung durch Eingabedatensymbole zu ermöglichen, ist ein grundlegender Aspekt des TST.

Nach der Ermittlung eines Schätzwertes $\hat{a}_{n-1}^{(i)}$ für $a_{n-1}^{(i)}$ wird das ungestörte, rekonstruierte Signal gemäß Gleichung (12) zusammen mit dem (gestörten) empfangenen Signal $y_n$ zur Berechnung eines Übergangsmetrikwertes

$$I(Z_n^i, y_n) = (y_n - \hat{r}_n^{(i)})^2 \qquad (13)$$

herangezogen.

Die Ermittlung des Schätzwert $\hat{a}_{n-1}^{(i)}$ kann in einfacher Weise auf der Basis des für den vorherigen Zeitschritt ermittelten Schätzwert $\hat{a}_{n-2}^{(i)}$ erfolgen: Der Senderzustand wird gleichsam nachgeführt.

Eine erste Möglichkeit hierfür besteht darin, vereinfachend anzunehmen, daß $a_{n-1}^{(i)}$ für alle Zustände i (in demselben Zeitschritt) identisch ist, d.h. für jeden Zeitschritt nur ein einziger "generalisierter" Senderzustand geschätzt werden muß. Dies kann gemäß

$$\hat{a}_{n-1}^{(i)} = \hat{a}_{n-1} = \hat{a}_{n-2} \exp\left\{ j\pi\eta \hat{d}_{n-1} \right\} \qquad (14)$$

erfolgen, wobei $\hat{d}_{n-1}$ ein beispielsweise mittels einer DFE-Technik erzeugter (vorläufiger) Wert für das rekonstruierte Eingabedatensymbol $d_n$ ist. Zur Durchführung eines solchen Verfahrens ist ein Entzerrer mit quantisierter Rückführung, sog. DF-(Decision Feedback-)Entzerrer, geeignet.

Eine zweite Möglichkeit zur Berechnung der Schätzwerte $\hat{a}_{n-1}^{(i)}$ für $a_{n-1}^{(i)}$ aus $\hat{a}_{n-2}^{(i)}$ ergibt sich aus der Beziehung:

$$\hat{a}_{n-1}^{(i)} = \hat{a}_{n-2}^{(i)} \exp\left\{ j\pi\eta \hat{d}_{n-1} \right\} \qquad (15)$$

Wiederum kann eine DFE-Technik zur Ermittlung eines Wertes für $\hat{d}_{n-1}$ eingesetzt werden.

Eine dritte Möglichkeit besteht darin, die Schätzwerte $\hat{a}_{n-1}^{(i)}$ auf der Basis des bereits erwähnten PSP-Verfahrens zu ermitteln. Das PSP-Verfahren ist in US 5,432,821 beschrieben.

Das PSP-Verfahren beruht allgemein darauf, einen Schätzwert für eine empfängerseitig unbekannte, einem bestimmten Zustand zugeordnete Größe auf der Basis von (im Empfänger bereits vorliegender) Information bezüglich des Pfades, der zu diesem Zustand hinführt, zu generieren.

Die Ermittlung von $\hat{a}_{n-1}^{(i)}$ nach dem PSP-Verfahren kann daher in allgemeiner Form durch die Gleichung

$$\hat{a}_{n-1}^{(i)} = G(S(Z_n^i)) \qquad (16)$$

beschrieben werden. Dabei ist $S(Z_n^i)$ die dem Pfad $P(Z_n^i)$ (d.h. desjenigen Pfads P, der zum Zeitschritt n im Zustand i endet) zugeordnete Sequenz von bereits entschiedenen Eingabedatensymbolen, die im folgenden mit

$$S(Z_n^i)= (d_0^{P(Z_n^i)}, d_1^{P(Z_n^i)}, .., d_{n-1}^{P(Z_n^i)}) \tag{17}$$

bezeichnet wird. $G(\cdot)$ bezeichnet eine Schätzfunktion, die einer solchen Sequenz von entschiedenen Eingabedatensymbolen einen Schätzwert zuordnet.

Eine speziellere Form des PSP-Verfahrens zur Ermittlung von $\hat{a}_{n-1}^{(i)}$ wird durch den Ausdruck

$$\hat{a}_{n-1}^{(i)} = \hat{a}_{n-2}^{(i)} \exp\left\{ j\pi\eta G(S(Z_n^i)) \right\} \tag{18}$$

angegeben. Ein einfaches Beispiel für $G(\cdot)$ ist in diesem Fall:

$$G(S(Z_n^i)) = d_{n-1}^{P(Z_n^i)} = z_n^{0,(i)} \tag{19}$$

d.h.

$$\hat{a}_{n-1}^{(i)} = \hat{a}_{n-2}^{(i)} \exp\left\{ j\pi\eta d_{n-1}^{P(Z_n^i)} \right\} \tag{20}$$

Das PSP-Verfahren kann zur Ermittlung weiterer im Empfänger unbekannter Parameter eingesetzt werden. Es wird in diesem Zusammenhang darauf hingewiesen, daß die Anwendung des vorstehend beschriebenen TST-Demodulationsverfahrens empfindlich davon abhängt, wie genau der Modulationsindex $\eta$ des Senders im Empfänger bekannt ist. Der im Empfänger zur Demodulation verwendete Modulationsindex wird im Folgenden mit $\hat{\eta}$ bezeichnet. Bereits geringe Abweichungen zwischen dem Modulationsindex $\eta$ und dem empfängerseitig eingesetzten Modulationsindex $\hat{\eta}$ führen zu deutlichen Einbußen in der Leistungsfähigkeit des TST-Algorithmus. Ursache hierfür ist, daß eine Abweichung $\Delta\eta$ des senderseitig angenommenen Modulationsindex gegenüber dem wahren Modulationsindex $\hat{\eta}$ (das heißt $\eta = \hat{\eta}+\Delta\eta$) zum Zeitschritt n einen Phasenfehler $\Delta\phi_n^{(\eta)}$ gemäß der Beziehung

$$\Delta\phi_n^{(\eta)} = \pi\Delta\eta \sum_{k=0}^{n} d_k \tag{21}$$

bewirkt. Der Phasenfehler $\Delta\phi^{(\eta)}$ ist also von der gesendeten Datenfolge $(d_0, d_1, .., d_{n-1})$ abhängig. Dieser Phasenfehler wirkt sich gemäß Gleichung (12) auf das ungestörte, rekonstruierte Signal aus.

Für den Fall, daß die Frequenzmodulation, wie in Fig. 2 dargestellt, relativ zu einer Trägerfrequenz $f_0$ vorgenommen wird und auf Empfängerseite die Verschiebung um die Trägerfrequenz durch Heruntermischen rückgängig gemacht wird, kann ein Frequenz-Offset zwischen der Trägerfrequenz $f_0$ des Senders und der Frequenz $f'_0$, die zum Heruntermischen verwendet wird, auftreten. Dieser Frequenz-Offset, oder auch eine Drift einer der beiden Frequenzen, wirkt sich ebenfalls als Phasenfehler des ungestörten, rekonstruierten Signals aus. Beispielsweise führt ein konstanter Frequenz-Offset $\Delta f = f_0 - f'_0$ zu einem Phasenfehler mit linearem Verlauf:

$$\Delta\phi_n^{(\Delta f)} = 2\pi \cdot \Delta f \cdot n \cdot T \tag{22}$$

Zur Bestimmung des Phasenfehlers wird die Phase zwischen dem rekonstruierten Signal (siehe Gleichung 12) und dem empfangenen Signal $y_n$ gemäß

$$\hat{\phi}_n^{(i)} = -\arg\left(\hat{r}_n^{(i)} \cdot y_n^*\right) \qquad (23)$$

bestimmt. Dabei bezeichnet "arg" den Winkel einer komplexen Zahl im Bogenmaß und "*" bezeichnet die komplex Konjugierte der mit dem Stern versehenen komplexen Zahl.

Der Phasenfehler $\hat{\phi}_n^{(i)}$ wird in folgender Weise zur Phasenkorrektur des ungestörten, rekonstruierten Signals $r_n^{(i)}$ eingesetzt:

$$\hat{a}_{n-1,korrigiert}^{(i)} = G(S(Z_n^i)) \cdot \exp(j\hat{\phi}_n^{(i)}) \qquad (24)$$

d.h. gemäß Gl. 12 ergibt sich

$$\hat{r}_{n,korrigiert}^{(i)} = \hat{r}_n^{(i)} \cdot \exp(j\hat{\phi}_n^{(i)}) \qquad (25)$$

Der Phasenfehler $\hat{\phi}_n^{(i)}$ bildet ebenfalls einen unbekannten Parameter in dem VA. Eine datenbasierte Schätzung dieses unbekannten Parameters kann ebenfalls mit der PSP-Methode realisiert werden. Das heißt, daß für jeden Pfad ("survivor") innerhalb des Trellis-Diagramms die für diesen Pfad getroffenen Eingabedatensymbol-Entscheidungen für eine Schätzung dieses unbekannten Parameters in Analogie zu den Gleichungen 16, 17 verwendet werden. Der unbekannte Parameter wird nach jedem Zeitschritt geschätzt und es findet eine Aktualisierung desselben statt. Der aktualisierte Schätzwert des unbekannten Parameters (Phasenfehler $\hat{\phi}_n^{(i)}$) wird dann wie bereits beschrieben für die nächste Berechnung eines Übergangsmetrikwertes verwendet.

Um gefilterte Schätzwerte für die Phasenfehler zu erhalten, werden die Phasenfehler, die für die einzelnen Zustände bestimmt wurden, gefiltert. Als Filter kann z.B. ein IIR-Filter erster Ordnung eingesetzt werden, das gefilterte Schätzwert für den Zustand mit dem Index i zum n-ten Zeitschritt ergibt sich gemäß der folgenden Beziehung:

$$\hat{\theta}_n^{(i)} = \beta_1 \hat{\phi}_n^{(i)} + \beta_2 \hat{\phi}_{n-1}^{(i)} \qquad (26)$$

dabei bezeichnen $\beta_1$ und $\beta_2$ geeignet gewählte Filterkonstanten.

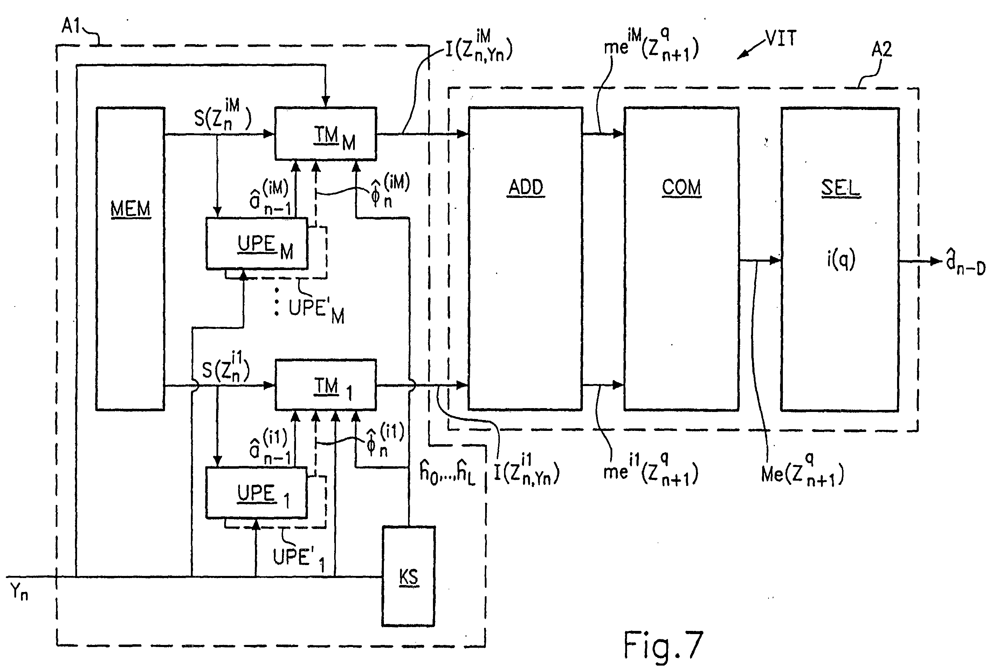

Fig. 7 zeigt ein Blockschaltbild einer erfindungsgemäßen Einrichtung zur Durchführung der TST-MLSE. In dem Beispiel wird sowohl für die Ermittlung der ersten Schätzwerte (für die Ersatzsymbole) als auch für die Ermittlung der zweiten Schätzwerte (für die Phasenfehler) die PSP-Methode eingesetzt.

Der Viterbi-Entzerrer VIT nimmt, wie in Fig. 3 dargestellt, die komplexwertigen Abtastwerte $y_n$ entgegen und gibt die geschätzten Eingabedatensymbole $d_n$ mit einer Demodulationsverzögerung D aus. Der Entzerrer VIT umfaßt einerseits einen Abschnitt A2 zur Ausführung der ACS-Operationen. Der Abschnitt A2 umfaßt eine erste Einheit ADD zur Berechnung der Metrikwerte, eine zweite Einheit COM, in welcher ein Vergleich der aktualisierten Metriken vorgenommen wird, und eine dritte Einheit SEL, welche die Auswahloperation durchführt, das heißt denjenigen Pfad in den betrachteten Zielzustand fortsetzt, für den in der zweiten Einheit COM die kleinste Metrik ermittelt wurde.

Andererseits umfaßt der Entzerrer VIT einen ersten Berechnungsabschnitt A1, der dem zweiten Berechnungsabschnitt A2 im Signalweg vorgeschaltet ist. Der erste Berechnungsabschnitt A1 umfaßt einen Kanalschätzer KS, M Unbekannte-Parameter-Schätzer $UPE_1$, .., $UPE_M$, M Berechnungsabschnitte $TM_1$, .., $TM_M$ zur Berechnung von Übergangsmetrikwerten und einen Pfadspeicher MEM.

Der Kanalschätzer KS berechnet die geschätzten Kanalparameter $\hat{h}_0$, .., $\hat{h}_L$ und teilt diese den Berechnungsabschnitten $TM_1$, .., $TM_M$ für die Berechnung der Übergangsmetrikwerte mit.

In dem Pfadspeicher MEM sind die Sequenzen von entschiedenen Eingabedatensymbolen $S(Z_n^i)$ bezüglich sämtlicher in Trellis-Diagramm verfolgter Pfade abgespeichert. Ihre Anzahl entspricht der im Trellis-Diagramm betrachteten Zustände, das heißt ist gleich M oder größer. Die Sequenzen von entschiedenen Eingabedatensymbolen werden zu jedem Zeitschritt fortgeschrieben.

Im folgenden wird die Arbeitsweise des Viterbi-Entzerrers VIT bezüglich eines vorgegebenen Zielzustands $Z_{n+1}^q$ betrachtet. Den Unbekannte-Parameter-Schätzern $UPE_1$, .., $UPE_M$ werden die den möglichen Vorgänger-Zuständen des betrachteten Zustands zugeordneten Sequenzen von entschiedenen Eingabedatensymbolen aus MEM zugeführt. Die Unbekannte-Paramter-Schätzer $UPE_1$, .., $UPE_M$ schätzen für jeden Pfad den Zustand $\hat{a}_{n-1}^{(i1)}$, .., $\hat{a}_{n-1}^{(iM)}$ des Senders zum vorhergehenden Zeitschritt und teilen die Schätzwerte den Berechnungsabschnitten $TM_1$, .., $TM_M$ für die Berechnung der Übergangsmetrikwerte mit. Gemäß Gleichung 18 werden die Schätzwerte für die Ersatzsymbole (d.h. die pfadbezogenen Senderzustände) im Nachführbetrieb ermittelt.

Die in den Berechnungsabschnitten $TM_1$, .., $TM_M$ berechneten Übergangsmetrikwerte $I(Z_n^{i1}, y_n)$, .., $I(Z_n^{iM}, y_n)$ werden der Additions-Einheit ADD zugeführt und in der bereits beschriebenen Weise in den Einheiten COM und SEL weiterverarbeitet. Nach Durchführung der ACS-Operationen zu sämtlichen Zielzuständen zum Zeitschritt n+1 sind die Pfade (survivors) für diesen Zeitschritt ermittelt.

Schaltungstechnisch kann der Viterbi-Entzerrer VIT in nicht dargestellter Weise auch so ausgelegt sein, daß die ACS-Operationen für sämtliche Zielzustände parallel durchgeführt werden.

Zur Schätzung der Phasenfehler der ungestörten, rekonstruierten Signale sind weitere Unbekannte-Parameter-Schätzer $UPE'_1$, .., $UPE'_M$, vorhanden, die eine Schätzung der jeweiligen Phasenfehler gemäß den Gleichungen 21 bis 23 und/oder 26 vornehmen. Die geschätzten Phasenfehler bzw. geschätzten gefilterten Phasenfehler werden den Berechnungsabschnitten $TM_1$, .., $TM_M$ mitgeteilt. Durch die Berücksichtigung dieser Phasenfehler (gemäß Gleichungen 24 und 25, analog bei der Zugrundelegung gefilterter geschätzter Phasenfehler) bei der Berechnung der Übergangsmetrikwerte in den Berechnungsabschnitten $TM_1$, .., $TM_M$ wird die Leistungsfähigkeit der TST-Methode wesentlich erhöht.

Abschließend wird darauf hingewiesen, daß alternativ zu dem in Fig. 7 gezeigten Viterbi-Entzerrer VIT, der unbekannte Parameter auf der Basis des PSP-Verfahrens ermittelt, auch ein DF-Entzerrer vorgesehen sei kann.

**Patentansprüche**

1. Verfahren zum Schätzen einer Folge von Eingabedatensymbolen eines CPFSK-modulierten, über einen gestörten Kanal übertragenen Datensignals durch wiederholte Ausführung einer Add-Compare-Select-Operation, **dadurch gekennzeichnet, daß**

   - zur Berechnung eines Übergangsmetrikwertes bezüglich eines Übergangs von einem Ausgangszustand zum Zeitschritt n zu einem Zielzustand zum Zeitschritt n+1

      -- ein erster Schätzwert für ein bei der linearen Näherung der CPFSK auftretendes Ersatzsymbol bezüglich des n-1-ten Zeitschrittes ermittelt und
      -- bei der Berechnung des Übergangsmetrikwertes berücksichtigt wird.

2. Verfahren nach Anspruch 1,
   **dadurch gekennzeichnet,**

   - **daß** die Ermittlung des ersten Schätzwertes unter Verwendung des im vorhergehenden Zeitschritt ermittelten ersten Schätzwertes erfolgt.

3. Verfahren nach Anspruch 1 oder 2,
   **dadurch gekennzeichnet,**

   - **daß** für jeden Ausgangszustand eine gesonderte Ermittlung eines ersten Schätzwertes durchgeführt wird, und zwar auf der Basis von auf dem zu dem betrachteten Ausgangszustand $(Z_n^i)$ führenden Pfad $(P(Z_n^i))$ getroffenen Entscheidungen von Eingabedatensymbolen.

4. Verfahren nach Anspruch 3,
   **dadurch gekennzeichnet,**

   - **daß** die Ermittlung des ersten Schätzwertes nach der Gleichung

$$\hat{a}_{n-1}^{(i)} = \hat{a}_{n-2}^{(i)} \exp\left\{j\pi\eta d_{n-1}^{P(Z_n^i)}\right\}$$

erfolgt, wobei $\hat{a}_{n-1}^{(i)}$ bzw. $\hat{a}_{n-2}^{(i)}$ die ersten Schätzwerte für das n-1-te bzw. n-2-te Ersatzsymbol zum Ausgangszustand mit Index i sind, $d^{P(Z_n^i)}$ ein im Empfänger entschiedenes Eingabedatensymbol bezüglich des zu dem betrachteten Ausgangszustand $Z_n^i$ führenden Pfads ist, und $\eta$ den Modulationsindex bezeichnet.

**5.** Verfahren nach einem der vorhergehenden Ansprüche,
**dadurch gekennzeichnet,**

- **daß** ein zweiter Schätzwert für eine Phasenkorrektur eines für die Berechnung des Übergangsmetrikwertes unter Verwendung des ersten Schätzwertes ermittelten rekonstruierten Signalwertes ermittelt und bei der Berechnung des Übergangsmetrikwertes berücksichtigt wird.

**6.** Verfahren nach Anspruch 5
**dadurch gekennzeichnet,**

- **daß** für jeden Ausgangszustand eine gesonderte Ermittlung eines zweiten Schätzwertes durchgeführt wird, und zwar auf der Basis von auf dem zu dem betrachteten Ausgangszustand ($Z_n^i$) führenden Pfad ($P(Z_n^i)$) getroffenen Entscheidungen von Eingabedatensymbolen.

**7.** Verfahren nach Anspruch 5 oder 6,
**dadurch gekennzeichnet,**

- **daß** zur Ermittlung des zweiten Schätzwertes eine Phasendifferenz zwischen dem rekonstruierten Signalwert und einem Wert eines empfangenen Datensymbols berechnet wird.

**8.** Einrichtung zum Schätzen einer Folge von Eingabedatensymbolen eines CPFSK-modulierten, über einen gestörten Kanal übertragenen Datensignals, mit

- einer Einrichtung (A2) zur Durchführung von Add-Compare-Select-Operationen,

**gekennzeichnet durch**

- eine Einheit (TM1, .., TMM) zur Berechnung eines Übergangsmetrikwertes bezüglich eines Übergangs von einem Ausgangszustand zum Zeitschritt n zu einem Zielzustand zum Zeitschritt n+1 unter Berücksichtigung eines ersten Schätzwertes für ein bei der linearen Näherung der CPFSK auftretendes Ersatzsymbol bezüglich des n-1 -ten Zeitschrittes, und
- ein erstes Mittel (UPE1, .., UPEM) zur Ermittlung des ersten Schätzwertes und zum Mitteilen des ersten Schätzwertes an die Einheit (TM1, .., TMM) zur Berechnung eines Übergangsmetrikwertes.

**9.** Einrichtung nach Anspruch 8,
**dadurch gekennzeichnet,**

- **daß** das erste Mittel ($UPE_1$, .., $UPE_M$) die Ermittlung des ersten Schätzwertes unter Verwendung des im vorhergehenden Zeitschritt ermittelten ersten Schätzwertes durchführt.

**10.** Einrichtung nach Anspruch 8 oder 9,
**dadurch gekennzeichnet,**

- **daß** das erste Mittel eine Mehrzahl von Berechnungsabschnitten ($UPE_1$, .., $UPE_M$) umfaßt, und
- **daß** jeder Berechnungsabschnitt ($UPE_1$; ..; $UPE_M$) eine gesonderte Berechnung eines ersten Schätzwertes für das n-1-te Ersatzsymbol auf der Basis von getroffenen Entscheidungen von Eingabedatensymbolen für einen zu dem betrachteten Ausgangszustand ($Z_n^i$) führenden Pfad ($P(Z_n^i)$) durchführt.

**11.** Einrichtung nach Anspruch 10,
**dadurch gekennzeichnet,**

- **daß** jeder Berechnungsabschnitt ($UPE_1$; ..; $UPE_M$) die Berechnung des ersten Schätzwertes nach der Gleichung

$$\hat{a}^{(i)}_{n-1} = \hat{a}^{(i)}_{n-2} \exp\left\{j\pi\eta d^{P(Z^i_n)}_{n-1}\right\}$$

durchführt, wobei $\hat{a}^{(i)}_{n-1}$ bzw. $\hat{a}^{(i)}_{n-2}$ die ersten Schätzwerte für das n-1-te bzw. n-2-te Ersatzsymbol zum Ausgangszustand mit Index i sind, $d^{P(Z^i_n)}$ ein im Empfänger entschiedenes Eingabedatensymbol bezüglich des zu dem betrachteten Ausgangszustand ($Z^i_n$) führenden Pfads ist, und η den Modulationsindex bezeichnet.

12. Einrichtung nach einem der Ansprüche 8 bis 11, **gekennzeichnet durch**

   - ein zweites Mittel (UPE'$_1$, .., UPE'$_M$) zur Ermittlung eines zweiten Schätzwertes für eine Phasenkorrektur eines für die Berechnung des Übergangsmetrikwertes unter Verwendung des ersten Schätzwertes ermittelten rekonstruierten Signalwertes.

13. Einrichtung nach Anspruch 12,
   **dadurch gekennzeichnet,**

   - **daß** das zweite Mittel eine Mehrzahl von Berechnungsabschnitten (UPE'$_1$, .., UPE'$_M$) umfaßt, und
   - **daß** jeder Berechnungsabschnitt (UPE'$_1$; ..; UPE'$_M$) eine gesonderte Berechnung eines, zweiten Schätzwertes für das n-1-te Ersatzsymbol auf der Basis von getroffenen Entscheidungen von Eingabedatensymbolen für den zu dem betrachteten Ausgangszustand ($Z^i_n$) führenden Pfad (P($Z^i_n$)) durchführt.

## Claims

1. Method for estimating a sequence of input data symbols of a CPFSK-modulated data signal, transmitted via a faulty channel, by repeated execution of an Add-Compare-Select operation, **characterized in that**

   - in order to calculate a transition metric value with reference to a transition from an output state at the time step n to a target state at the time step n+1,

     -- a first estimated value is determined for a replacement symbol, occurring in the linear approximation of the CPFSK, with reference to the n-1th time step, and
     -- is taken into account in the calculation of the transition metric value.

2. Method according to claim 1, **characterized**

   - **in that** the determination of the first estimated value is performed by using the first estimated value determined in the preceding time step.

3. Method according to claim 1 or 2, **characterized**

   - **in that** a separate determination of a first estimated value is carried out for each output state, specifically on the basis of decisions on input data symbols taken on the path (P($Z^i_n$)) leading to the output state ($Z^i_n$) considered.

4. Method according to claim 3, **characterized**

   - **in that** the determination of the first estimated value is performed using the equation

$$\hat{a}^{(i)}_{n-1} = \hat{a}^{(i)}_{n-2} \exp\left\{j\pi\eta d^{P(Z^i_n)}_{n-1}\right\},$$

$\hat{a}^{(i)}_{n-1}$ and $\hat{a}^{(i)}_{n-2}$ being the first estimated values for the n-1th and n-2th replacement symbol, respectively, relating to the output state with index i, $d^{P(Z^i_n)}$ being an input data symbol, decided in the receiver, with reference to the path leading to the output state $Z^i_n$ considered, and η denoting the modulation index.

5. Method according to one of the preceding claims, **characterized**

- **in that** a second estimated value for a phase correction of a reconstructed signal value determined for calculating the transition metric value by using the first estimated value is determined and considered in calculating the transition metric value.

6. Method according to claim 5, **characterized**

- **in that** a separate determination of a second estimated value is carried out for each output state, specifically on the basis of decisions on input data symbols taken on the path $(P(Z_n^1))$ leading to the output state $(Z_n^i)$ considered.

7. Method according to claim 5 or 6, **characterized**

- **in that** in order to determine the second estimated value, a phase difference is calculated between the reconstructed signal value and a value of the received data symbol.

8. Device for estimating a sequence of input data symbols of a CPFSK-modulated data signal transmitted via a faulty channel, having

- a device (A2) for carrying out Add-Compare-Select operations, **characterized by**,
- a unit $(TM_1, .., TM_M)$ for calculating a transition metric value with reference to a transition from an output state at the time step n to a target state at the time step n+1 taking into account a first estimated value for a replacement symbol, occurring in the linear approximation of the CPFSK, with reference to the n-1th time step, and
- a first means $(UPE_1, .., UPE_M)$ for determining the first estimated value, the first estimated value and for communicating to the unit $(TM_1, .., TM_M)$ for calculating a transition metric value.

9. The device as claimed in Claim 8, **characterized**

- **in that** the first means $(UPE_1, .., UPE_M)$ carries out the determination of the first estimated value by using the first estimated value determined in the preceding time step.

10. The device as claimed in Claim 8 or 9, **characterized**

- **in that** the first means comprises a multiplicity of calculating sections $(UPE_1, .., UPE_M)$, and
- **in that** each calculating section $(UPE_1; ..; UPE_M)$ carries out a separate calculation of a first estimated value for the n-1th replacement symbol on the basis of decisions taken on input data symbols for a path $(P(Z_n^i))$ leading to the output state $(Z_n^i)$ considered.

11. The device as claimed in Claim 10, **characterized**

- **in that** each calculating section $(UPE_1; ..; UPE_M)$ carries out the calculation of the first estimated value using the equation

$$\hat{a}_{n-1}^{(i)} = \hat{a}_{n-2}^{(i)} \exp\left\{ j\pi\eta d_{n-1}^{P(Z_n^i)} \right\},$$

$\hat{a}_{n-1}^{(i)}$ and $\hat{a}_{n-2}^{(i)}$ respectively being the first estimated values for the n-1th and n-2th replacement symbols relating to the output state of index i, $d^{P(Z_n^i)}$ being an input data symbol decided in the receiver with reference to the path leading to the output state $(Z_n^i)$ considered, and $\eta$ denoting the modulation index.

12. Device as claimed in one of Claims 8 to 11, **characterized**

- **by** a second means $(UPE'_1, .., UPE'_M)$ for determining a second estimated value for a phase correction of a reconstructed signal value determined for calculating the transition metric value by using the first estimated value.

**13.** The device as claimed in Claim 12, **characterized**

- **in that** the second means comprises a multiplicity of calculating sections (UPE'$_1$, .., UPE'$_M$), and
- **in that** each calculating section (UPE'$_1$; ..; UPE'$_M$) carries out a separate calculation of a second estimated value for the n-1th replacement symbol on the basis of decisions taken on input data symbols for the path (P($Z_n^i$)) leading to the output state ($Z_n^i$) considered.

**Revendications**

**1.** Procédé pour l'estimation d'une séquence de symboles de données d'entrée d'un signal de données modulé CPFSK (Continuous Phase FSK) et transmis via un canal parasité au moyen d'une exécution répétée d'une opération Add-Compare-Select,
  **caractérisé par le fait que**

- pour le calcul d'une valeur métrique de transition concernant une transition d'un état initial à l'instant n à un état final à l'instant n + 1,

  -- on détermine une première valeur estimée pour un symbole équivalent, apparaissant lors de l'approximation linéaire de la CPFSK, concernant l'instant n - 1, et
  -- on la prend en compte lors du calcul de la valeur métrique de transition.

**2.** Procédé selon la revendication 1,
  **caractérisé par le fait que**

- la détermination de la première valeur estimée s'effectue en utilisant la première valeur estimée déterminée à l'instant précédent.

**3.** Procédé selon la revendication 1 ou 2,
  **caractérisé par le fait que**

- pour chaque état initial, on effectue une détermination particulière d'une première valeur estimée, et ce sur la base de décisions, prises sur le chemin (P($Z_n^i$)) menant à l'état initial considéré ($Z_n^i$), de symboles de données d'entrée.

**4.** Procédé selon la revendication 3,
  **caractérisé par le fait que**

- la détermination de la première valeur estimée s'effectue selon l'équation

$$\hat{a}_{n-1}^{(i)} \;=\; \hat{a}_{n-2}^{(i)} \; \exp\left\{ j\pi\eta d_{n-1}^{P\left(Z_n^i\right)} \right\},$$

$\hat{a}_{n-1}^{(i)}$ et $\hat{a}_{n-2}^{(i)}$ étant les premières valeurs estimées pour le n - 1-ème et le n - 2-ème symbole équivalent à l'état initial d'indice i,

$$d_{n-1}^{P\left(Z_n^i\right)}$$

étant un symbole de données d'entrée décidé dans le récepteur concernant le chemin menant à l'état initial considéré $Z_n^i$ et $\eta$ étant l'indice de modulation.

**5.** Procédé selon l'une des revendications précédentes,
  **caractérisé par le fait que**

- on détermine une deuxième valeur estimée pour une correction de phase d'une valeur de signal reconstruite déterminée pour le calcul de la valeur métrique de transition en utilisant la première valeur estimée et on la prend en compte lors du calcul de la valeur métrique de transition.

6. Procédé selon la revendication 5,
   **caractérisé par le fait que**

   - pour chaque état initial, on effectue une détermination particulière d'une deuxième valeur estimée, et ce sur la base de décisions, prises sur le chemin $(P(Z_n^i))$ menant à l'état initial considéré $(Z_n^i)$, de symboles de données d'entrée.

7. Procédé selon la revendication 5 ou 6,
   **caractérisé par le fait que**

   - pour la détermination de la deuxième valeur estimée, on calcule une différence de phase entre la valeur de signal reconstruite et une valeur d'un symbole de données reçu.

8. Dispositif d'estimation d'une séquence de symboles de données d'entrée d'un signal de données modulé CPFSK (Continuous Phase FSK) et transmis via un canal parasité,

   - avec un dispositif (A2) pour mettre en oeuvre des opérations Add-Compare-Select,

     **caractérisé par**

   - une unité $(TM_1, ..., TM_M)$ pour le calcul d'une valeur métrique de transition concernant une transition d'un état initial à l'instant n à un état final à l'instant n + 1 en tenant compte d'une première valeur estimée pour un symbole équivalent apparaissant lors de l'approximation linéaire de la CPFSK et concernant le n - 1-ème instant, et
   - un premier moyen $(UPE_1, ..., UPE_M)$ pour la détermination de la première valeur estimée et pour la transmission de la première valeur estimée à l'unité $(TM_1, ..., TM_M)$ en vue du calcul d'une valeur métrique de transition.

9. Dispositif selon la revendication 8,
   **caractérisé par le fait que**

   - le premier moyen $(UPE_1, ..., UPE_M)$ met en oeuvre la détermination de la première valeur estimée en utilisant la première valeur estimée déterminée à l'instant précédent.

10. Dispositif selon la revendication 8 ou 9,
    **caractérisé par le fait que**

    - le premier moyen comprend une multiplicité de sections de calcul $(UPE_1, ..., UPE_M)$, et
    - chaque section de calcul $(UPE_1 ; ... ; UPE_M)$ effectue un calcul particulier d'une première valeur estimée pour le n - 1-ème symbole équivalent sur la base de décisions prises concernant des symboles de données d'entrée pour un chemin $(P(Z_n^i))$ menant à l'état initial considéré $(Z_n^i)$.

11. Dispositif selon la revendication 10,
    **caractérisé par le fait que**

    - chaque section de calcul $(UPE_1 ; ... ; UPE_M)$ effectue le calcul de la première valeur estimée selon l'équation

$$\hat{a}_{n-1}^{(i)} = \hat{a}_{n-2}^{(i)} \exp\left\{ j\pi\eta d_{n-1}^{P\left(Z_n^i\right)} \right\},$$

$\hat{a}_{n-1}^{(i)}$ et $\hat{a}_{n-2}^{(i)}$ étant les premières valeurs estimées pour le n - 1-ème et le n - 2-ème symbole équivalent à l'état initial d'indice i,

$$d\!\!\!\phantom{.}^{P\left(Z_n^i\right)}_{\phantom{d}n-1}$$

étant un symbole de données d'entrée décidé dans le récepteur concernant le chemin menant à l'état initial considéré ($Z_n^i$) et $\eta$ étant l'indice de modulation.

**12.** Dispositif selon l'une des revendications 8 à 11,
      **caractérisé par**

- un deuxième moyen (UPE'$_1$, ..., UPE'$_M$) pour la détermination d'une deuxième valeur estimée pour une correction de phase d'une valeur de signal reconstruite déterminée pour le calcul de la valeur métrique de transition en utilisant la première valeur estimée.

**13.** Dispositif selon la revendication 12,
      **caractérisé par le fait que**

- le deuxième moyen comprend une multiplicité de sections de calcul (UPE'$_1$, ..., UPE'$_M$), et
- chaque section de calcul (UPE'$_1$ ; ... ; UPE'$_M$) effectue un calcul particulier d'une deuxième valeur estimée pour le n - 1-ème symbole équivalent sur la base de décisions prises concernant des symboles de données d'entrée pour le chemin ($P(Z_n^i)$) menant à l'état initial considéré ($Z_n^i$).

EP 1 179 936 B1

Fig.1

Fig.2

19

Fig.3

Fig.4a

Fig.4b

Fig.5

Fig.6

Fig.7

EP 1 179 936 B1